# EUROPÄISCHE PATENTSCHRIFT

(11) **EP 4 269 857 B1**
(45) Veröffentlichungstag und Bekanntmachung des Hinweises auf die Patenterteilung: **15.04.2026**
(21) Anmeldenummer: 22169915.0
(22) Anmeldetag: 26.04.2022
(51) Int. Cl.: F16P 3/08, E05B 41/00, E05B 47/02

(54) **SICHERHEITSSCHALTERANORDNUNG**
SAFETY CIRCUIT SYSTEM
ENSEMBLE INTERRUPTEUR DE SÉCURITÉ

(43) Veröffentlichungstag der Anmeldung: 01.11.2023
(73) Patentinhaber: EUCHNER GmbH + Co. KG, 70771 Leinfelden-Echterdingen (DE)
(72) Erfinder: HERMANN, Bernd, 72108 Rottenburg (DE)
(74) Vertreter: Ruckh, Rainer Gerhard

(56) Entgegenhaltungen:
- EP-A1- 3 346 177
- WO-A2-03/085833
- DE-U1- 202013 012 231
- DE-U1- 29 823 931
- US-A1- 2009 173 823

## Beschreibung

Die Erfindung betrifft eine Sicherheitsschalteranordnung.

Bekannte Sicherheitsschalter bilden zusammen mit einem Betätiger eine Sicherheitsschalteranordnung, die im Bereich der Sicherheitstechnik eingesetzt wird. Für den Einsatz im Bereich der Sicherheitstechnik, insbesondere im Bereich des Personenschutzes ist es erforderlich, dass die Sicherheitsschalteranordnung normative Anforderungen hinsichtlich deren Fehlersicherheit aufweist, so dass gewährleistet ist, dass mit der Sicherheitsschalteranordnung eine entsprechend sichere Überwachungsfunktion durchgeführt werden kann. Eine derartige Sicherheitsschalteranordnung kann typischerweise zur Sicherung des Zugangs zu einem Gefahrenbereich eingesetzt werden. Beispielsweise kann mit einer Sicherheitsschalteranordnung eine Verriegelung einer trennenden Schutzeinrichtung wie einer Schutztür als Zugang zu einem Gefahrenbereich, abgesichert werden. In diesem Fall wird beispielsweise der Betrieb einer gefahrbringenden Anlage innerhalb des Gefahrenbereichs nur dann freigegeben, wenn mit der Sicherheitsschalteranordnung die Schutztür verriegelt ist. Die Freigabe der Anlage kann über eine Sicherheitssteuerung erfolgen, welcher sicherheitsrelevante Schaltsignale der Sicherheitsschalteranordnung zugeführt sind.

Zur Verriegelung der Schutztür wird, wenn sich die Schutztür in ihrer Schließstellung und Verriegelungsposition befindet, der Betätiger in Form eines Riegels oder dergleichen in Eingriff mit dem Sicherheitsschalter gebracht, indem beispielsweise der Betätiger in eine Aussparung des Sicherheitsschalters eingefahren wird. Diese Verriegelung wird dadurch kontrolliert, dass mit einem RFID-Lesegerät im Sicherheitsschalter ein Transponder im Betätiger erkannt wird.

Zusätzlich zu dieser Verriegelung kann eine Zuhaltung der Schutztür vorgesehen sein. Eine derartige Zuhaltung ist beispielsweise aus der WO 2016/058718 A1 bekannt. Bei dieser Zuhaltung ist ein Zuhaltebolzen vorgesehen, der mittels eines Elektromotors mit einem Planetengetriebe betätigt wird. Mit dem elektrischen Antrieb kann der Zuhaltebolzen in eine Sperrstellung verfahren werden, in der der Betätiger mit dem Zuhaltebolzen zugehalten wird.

Die EP 3 346 177 A1 betrifft eine Sicherheitseinrichtung zum Absichern einer Maschine, mit einem Sensor, welcher dazu ausgelegt ist, die Anwesenheit eines Objekts in einem Überwachungsbereich zu detektieren und ein Erfassungssignal auszugeben, wenn sich ein Objekt in dem Überwachungsbereich befindet, und einer Auswerteeinheit, welche dazu ausgelegt ist, das Erfassungssignal von dem Sensor zu empfangen und ein Ausgangssignal in Abhängigkeit von dem Erfassungssignal zu erzeugen. Die Auswerteeinheit ist dazu ausgelegt, das Ausgangssignal in Abhängigkeit von zumindest einem zusätzlichen Kriterium zu erzeugen.

Der Erfindung liegt die Aufgabe zugrunde, eine Sicherheitsschalteranordnung mit erweiterter Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sicherheitsschalteranordnung mit einem Sicherheitsschalter und einem zugeordneten Betätiger, welcher in eine Eingriffsstellung am Sicherheitsschalter einbringbar ist. Eine Zuhaltevorrichtung ist vorhanden, mittels derer eine Zuhaltung des in die Eingriffsstellung eingebrachten Betätigers bewirkt ist. Mit vorhandenen Sensormitteln werden auf die Zuhaltevorrichtung einwirkende Kräfte erfasst.

Erfindungsgemäß weist die Zuhaltevorrichtung ein Zuhalteelement auf, welches in eine Sperrstellung verfahren werden kann, um die Zuhaltung des in die Eingriffsstellung eingebrachten Betätigers zu bewirken. Mit den Sensormitteln werden auf das Zuhalteelement einwirkende Kräfte erfasst.

Das Zuhalteelement kann direkt in Eingriff mit dem Betätiger gebracht werden. Alternativ kann mit dem Zuhalteelement ein weiteres Element wie z.B. ein Schaltrad betätigt werden, dass in Eingriff mit dem Betätiger gebracht wird.

Die erfindungsgemäße Sicherheitsschalteranordnung weist in bekannter Weise einen Sicherheitsschalter und einen relativ zu diesem beweglichen Betätiger auf. Die Sicherheitsschalteranordnung wird im Bereich der Sicherheitstechnik eingesetzt, insbesondere zur Sicherung des Zugangs zu einem Gefahrenbereich. Der Betätiger kann dann an einer trennenden Schutzeinrichtung, wie z.B. einer Schutztür, angeordnet sein, mit der der Zugang zum Gefahrenbereich verschlossen werden kann.

Eine derartige Schließstellung der trennenden Schutzeinrichtung oder allgemein ein sicherer Zustand, der die Freigabe einer Maschine oder Anlage ermöglicht, wird dadurch überwacht, dass der Betätiger in eine Eingriffsstellung am Sicherheitsschalter eingefahren ist. Dies wird vorteilhaft dadurch kontrolliert, dass dann, wenn sich der Betätiger in der Eingriffsstellung befindet, eine im Sicherheitsschalter integrierte RFID-Leseeinheit Daten aus einem Transponder im oder am Betätiger auslesen kann, da sich dann der Transponder im Lesebereich der RFID-Leseeinheit befindet.

Zur Sicherung des Betätigers in der Eingriffsstellung ist, vorzugsweise aber nicht zwingend, im Sicherheitsschalter integriert eine Zuhaltevorrichtung vorgesehen. Die Zuhaltevorrichtung sichert den Betätiger in der Eingriffsstellung d.h. durch die Zuhaltevorrichtung wird die Zuhaltung des Betätigers bewirkt. Die Stellung des Zuhalteelements der Zuhaltevorrichtung kann beispielsweise durch eine oder mehrere Lichtschranken überwacht werden.

Der Sicherheitsschalter generiert vorteilhaft dann ein Freigabesignal für das Inbetriebsetzen einer Maschine oder Anlage, wenn mit der RFID-Leseeinheit des Sicherheitsschalters die Daten aus dem Transponder des Betätigers erfasst werden und wenn die Zuhaltung des Betätigers bewirkt ist.

Ein Problem besteht darin, dass auf den Betätiger und damit auf das Zuhalteelement oder allgemein die Zuhaltevorrichtung externe Kräfte einwirken, beispielsweise über die trennende Schutzeinrichtung, an der der Betätiger angeordnet ist.

Derartige Kräfte können zu Beschädigungen der Zuhaltevorrichtung führen, so dass die Zuhaltevorrichtung und damit der Sicherheitsschalter in ihrer Funktion beeinträchtigt sind, wobei generell sogar die Zuhaltevorrichtung mit dem Sicherheitsschalter zerstört werden kann.

Zur Lösung dieser Problematik weist der Sicherheitsschalter erfindungsgemäß Sensormittel auf, mit welchen auf die Zuhaltevorrichtung, insbesondere das Zuhalteelement einwirkende Kräfte erfasst werden können. Damit wird eine Zustandskontrolle des Sicherheitsschalters und dessen Zuhaltevorrichtung bereitgestellt, mit der kritische Zustände aufgrund des Einwirkens externer Kräfte erfasst werden können. Mit dieser Zustandskontrolle können kritische Zustände erfasst werden, bevor Beschädigungen des Sicherheitsschalters und dessen Zuhaltevorrichtung auftreten, d.h. es wird ein Frühwarnsystem bereitgestellt, mit dem ein Anwender rechtzeitig vor Auftreten von Beschädigungen des Sicherheitsschalters und dessen Zuhaltevorrichtung gewarnt werden kann. Dadurch wird die Funktionssicherheit und Verfügbarkeit der Sicherheitsschalteranordnung erheblich erhöht.

Normalerweise erfahren Zuhaltevorrichtungen lediglich Kräfte im Bereich von einigen hundert Newton. Bei Sonderereignissen, wie z.B. Versuchen zum manipulativen, gewaltsamen Öffnen von Schutztüren können allerdings deutlich höhere Kräfte entstehen. Diesen Kräften kann eine Zuhaltung bei ordnungsgemäßer Auslegung widerstehen. Allerdings kann bei immer wiederkehrenden Kräften in dieser Höhe die Zuhaltevorrichtung dauerhaft beschädigt werden.

Gemäß einer vorteilhaften Ausführungsform weist die Zuhaltevorrichtung eine Lagerung auf, in der das Zuhalteelement beweglich gelagert ist.

In diesem Fall sind die Sensormittel in der Lagerung angeordnet.

Bei Auftreten äußerer Kräfte, insbesondere quer zur Längsachse des Zuhalteelements wirkenden Querkräften, wird das Zuhalteelement gegen die Lagerung gedrückt. Diese Kräfte werden mit den an der Innenwand der Lagerung angebrachten Sensormitteln erfasst.

Vorteilhaft sind die Sensormittel in Form von Dehnungsmessstreifen ausgebildet.

Die Dehnungsmessstreifen bilden kompakte, flächige Sensormittel, die nahezu ohne Beanspruchung zusätzlichen Einbauraums flexibel insbesondere in der Lagerung der Zuhaltevorrichtung installiert werden können. Die Dehnungsmessstreifen ermöglichen eine genaue Kraftmessung.

Um die durchzuführenden Kraftmessungen mit den Dehnungsmessstreifen weiter zu verbessern, sind diese vorteilhaft auf einer elastisch verformbaren Unterlage gelagert. Bei auftretenden Kräften wird diese Unterlage elastisch verformt, wodurch auch die Dehnung der Dehnungsmessstreifen vergrößert wird, wodurch diese in einem weiteren Bereich Signale generieren, was zu einer Erhöhung der Auflösung der Kraftmessungen führt.

Gemäß einer vorteilhaften Ausgestaltung werden mit den Sensormitteln zeitaufgelöste Kraftmessungen durchgeführt.

Die mit den Sensormitteln ermittelten Kraftwerte werden in einer Rechnereinheit des Sicherheitsschalters zeitaufgelöst erfasst und abgespeichert, wodurch der zeitliche Verlauf der einwirkenden Kräfte für eine Auswertung zur Verfügung steht.

Gemäß einer besonders vorteilhaften Ausführungsform der Erfindung sind Anzeigemittel vorhanden, mittels derer Ergebnisse der mit den Sensormitteln durchgeführten Kraftmessungen angezeigt werden.

Mit dem auf dem Anzeigemitteln visualisierten Anzeigen erhält ein Anwender der Sicherheitsschalteranordnungen Informationen über die durchgeführten Kraftmessungen und damit über den aktuellen Zustand der Sicherheitsschalteranordnung.

Anhand der Anzeigen wird der Anwender insbesondere über kritische Zustände der Sicherheitsschalteranordnung informiert. Anhand dieser Informationen kann der Anwender die Applikation, in der die Sicherheitsschalteranordnung eingesetzt wird, überprüfen und bei Bedarf Gegenmaßnahmen einleiten, um Funktionsbeeinträchtigungen, Beschädigungen oder sogar einen Ausfall der Sicherheitsschalteranordnung zu vermeiden.

Besonders vorteilhaft werden abhängig von mit den Sensormitteln durchgeführten Kraftmessungen Stör- und/oder Warnmeldungen angezeigt.

Mit einer Störmeldung wird angezeigt, wenn bereits eine Funktionsbeeinträchtigung der Sicherheitsschalteranordnung aufgrund der einwirkenden äußeren Kräfte vorliegt.

Eine Warnmeldung bildet eine Frühwarnmeldung derart, dass aufgrund der einwirkenden Kräfte kritische Zustände auftreten, die eine Gefahr einer Funktionsbeeinträchtigung der Sicherheitsschalteranordnung bedeuten.

Gemäß einer ersten Variante wird eine Stör- oder Warnmeldung generiert, wenn die gemessene Kraft einen Grenzwert überschreitet oder innerhalb eines Grenzwertbereichs liegt.

Die mit den Sensormitteln gemessenen Kräfte werden, entweder mit einem vorzugsweise in der Rechnereinheit gespeicherten Grenzwert oder einem durch zwei Grenzwerte definierten Grenzwertbereich, verglichen.

Liegen die gemessenen Kräfte oberhalb des Grenzwerts oder im Grenzwertbereich, wird ein Stör- oder Warnsignal generiert, wobei für die Generierung des Störsignals andere, höhere Grenzwerte als für die Generierung des Warnsignals verwendet werden.

Gemäß einer zweiten Variante wird eine Stör- oder Warnmeldung generiert, wenn innerhalb eines vorgegebenen Zeitintervalls die gemessene Kraft mit einer bestimmten Häufigkeit einen Grenzwertbereich überschreitet oder innerhalb eines Grenzwertbereichs liegt.

In diesem Fall wird nicht zwingend eine Stör- oder Warnmeldung generiert, wenn eine gemessene Kraft oberhalb des Grenzwerts oder im Grenzwertbereich liegt. Vielmehr erfolgt eine zeitaufgelöste Auswertung der gemessenen Kräfte. Bei dieser zeitaufgelösten Auswertung wird die Häufigkeit, mit der äußere Kräfte oberhalb des Grenzwerts oder im Grenzwert registriert werden, ermittelt. Dies stellt eine gegenüber der ersten Variante verfeinerte Auswertung derart dar, dass ein Stör- oder Warnsignal nur dann generiert wird, wenn mit einer vorgegebenen Mindesthäufigkeit äußere Kräfte oberhalb des Grenzwerts oder im Grenzwertbereich erfasst werden. Damit können zufällige Ausreißer oder kurzfristig auftretende Spitzen der äußeren Kräfte ausgefiltert werden, so dass diese nicht zur Generierung der Stör- oder Warnmeldungen führen.

Gemäß einer weiteren vorteilhaften Ausführungsform werden mit den Sensormitteln gemessene Kräfte an eine externe Einheit ausgelesen.

Insbesondere ist die externe Einheit ein Cloud-Rechner.

Diese Variante kann zusätzlich zu an dem Sicherheitsschalter vorgesehenen Anzeigemitteln zum Einsatz kommen.

Bei dieser Ausführungsform werden mit den Sensormitteln gemessene Kräfte zeitaufgelöst erfasst und in der Rechnereinheit vorzugsweise mit Zeitstempeln, die die Erfassungszeitpunkte der Kräfte kennzeichnen, gespeichert. Diese zeitaufgelösten Kraftwerte werden in die externe Einheit ausgegeben, wo diese ausgewertet werden. Prinzipiell können alle ermittelten Kräfte an die externe Einheit ausgegeben werden. Generell ist es auch möglich, nur einen Teil der ermittelten Kräfte in einem bestimmten Zeitraster an die externe Einheit auszugeben. Schließlich ist es möglich, nur solche Kräfte an die externe Einheit auszugeben, die auf kritische Zustände hindeuten. Anhand der eingegebenen Kraftwerte kann in der externen Einheit, insbesondere dem Cloud-Rechner eine Ferndiagnose der Sicherheitsschalteranordnung durchgeführt werden.

Besonders vorteilhaft kann mit einer externen Einheit in Form eines Cloud-Rechners ein verteiltes Kontrollsystem im Sinne von Industrie 4.0 bereitgestellt werden, bei welchem der Cloud-Rechner eine Vielzahl von Sicherheitsschalteranordnungen, die auch an mehreren Standorten verteilt sein können, kontrolliert und ggf. steuert.

Die Erfindung wird im Folgenden anhand der Zeichnungen erläutert. Es zeigen:
- Figur 1:: Schematische Darstellung einer Applikation der erfindungsgemäßen Sicherheitsschalteranordnung.
- Figur 2:: Darstellung der Sicherheitsschalteranordnung mit einem Sicherheitsschalter und einem Betätiger\
a) Betätiger außerhalb der Eingriffsstellung.
b) Betätiger in der Eingriffsstellung am Sicherheitsschalter bei nicht betätigter Zuhaltung.
c) Betätiger in der Eingriffsstellung am Sicherheitsschalter bei betätigter Zuhaltung.
- Figur 3:: Vergrößerte Teildarstellung des Sicherheitsschalters gemäß Figur 2 mit einer ersten Ausführungsform von Sensormitteln.
- Figur 4:: Vergrößerte Teildarstellung des Sicherheitsschalters gemäß Figur 2 mit einer zweiten Ausführungsform von Sensormitteln.
- Figur 5:: Kraftdiagramme für den Sicherheitsschalter gemäß den Figuren 2 und 3.
- Figur 6:: Netzwerk mit mehreren Sicherheitsschalteranordnungen und einem Cloud-Rechner.

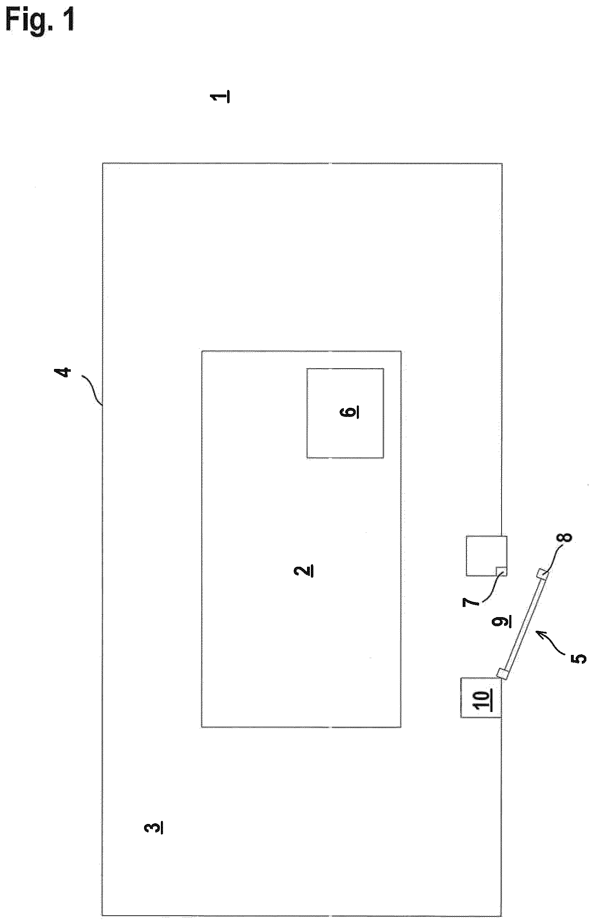

Figur 1 zeigt schematisch ein Sicherheitssystem 1 zum sicheren Betrieb einer Anlage 2. Von der Anlage 2 können Gefahren, insbesondere für Personen, ausgehen. Dementsprechend ist ein Gefahrenbereich 3 um die Anlage 2 mit einer Umzäunung 4 gesichert. In der Umzäunung 4 ist eine Schutztür 5 vorgesehen, über welche Personen Zugang zum Gefahrenbereich 3 erhalten können.

Das Sicherheitssystem 1 umfasst eine Sicherheitssteuerung 6, die den Betrieb der Anlage 2 steuert. Weiterhin ist ein Sicherheitsschalter 7 vorgesehen, mit dem überwacht wird, ob die Schutztür 5 geschlossen oder zugehalten ist oder nicht. Die Sicherheitssteuerung 6 steuert den Betrieb der Anlage 2 in Abhängigkeit der vom Sicherheitsschalter 7 generierten Signale.

Der Sicherheitsschalter 7 weist hierzu eine Anordnung von Sicherheitsausgängen auf, über welche die Signale an die Sicherheitssteuerung 6 ausgegeben werden. Dabei generiert der Sicherheitsschalter 7 Signale derart, dass der Betrieb der Anlage 2 nur dann freigegeben wird, wenn die Schutztür 5 in ihrer Schließstellung geschlossen und zugehalten ist.

Der Sicherheitsschalter 7 bildet mit einem Betätiger 8 eine Sicherheitsschalteranordnung 9. Der Sicherheitsschalter 7 ist in einem den Zugang begrenzenden Rahmen 10 stationär angeordnet. Der Betätiger 8 ist an der Schutztür 5 angeordnet und damit beweglich zum Sicherheitsschalter 7.

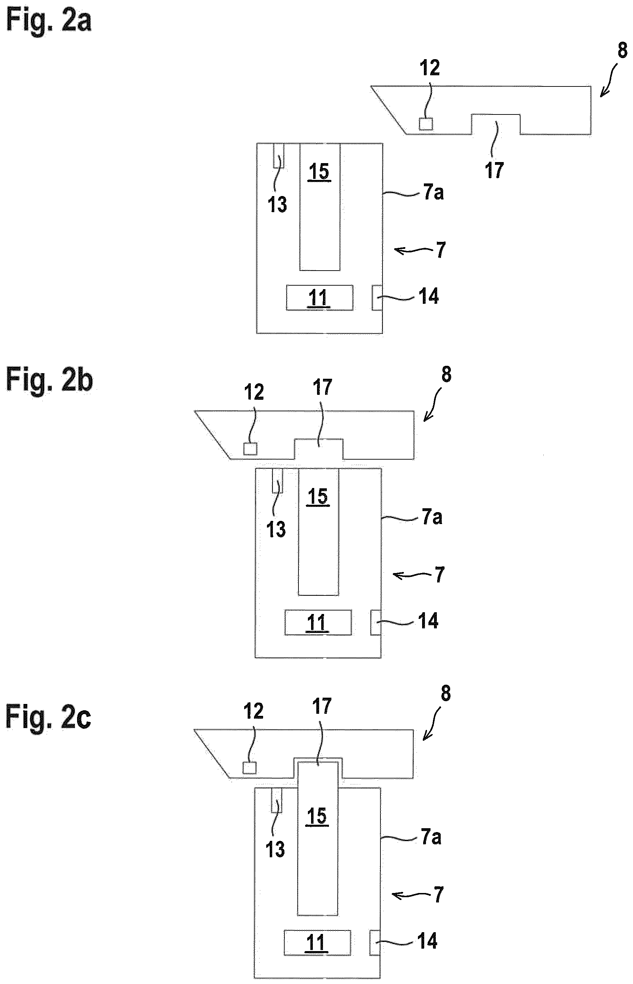

Die Figuren 2a bis 2c zeigen die Sicherheitsschalteranordnungen 9 mit dem Betätiger 8 in unterschiedlichen Positionen relativ zum Sicherheitsschalter 7. Der Sicherheitsschalter 7 weist ein Gehäuse 7a auf. Dort ist eine Rechnereinheit 11 integriert, die zur Generierung der über die nicht dargestellten Sicherheitsausgänge auszugebenden Signale ausgebildet ist. Die Rechnereinheit 11 ist fehlersicher und weist hierzu einen redundanten Aufbau auf. In dem Gehäuse 7a des Sicherheitsschalters 7 ist ein RFID-Lesegerät 13 angeordnet, mit dem Daten aus einem Transponder 12 im Betätiger 8 ausgelesen werden können, wenn sich der Betätiger 8 innerhalb des Lesebereichs des RFID-Lesegeräts 13 befindet.

An der Außenseite des Gehäuses 7a des Sicherheitsschalters 7 sind Anzeigemittel 14 angeordnet, die von einem Display oder von Leuchtdioden gebildet sein können.

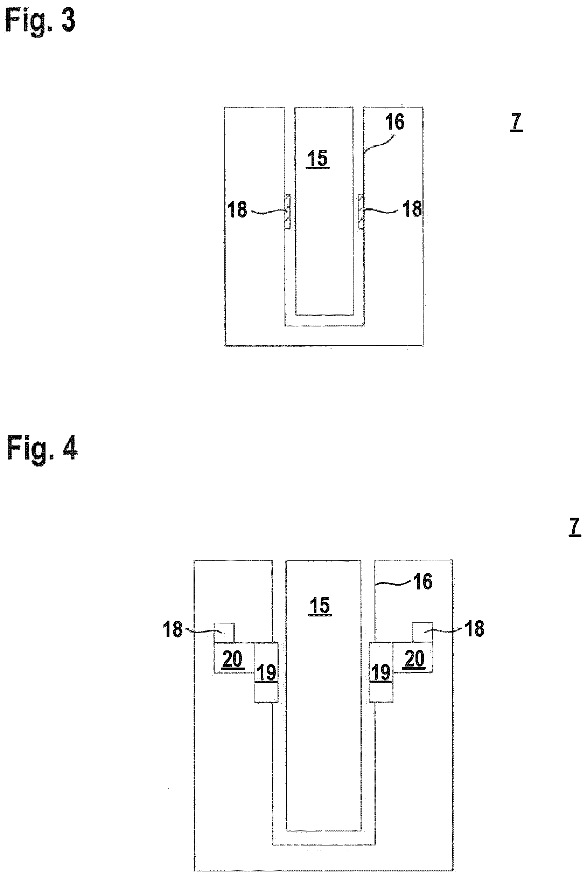

Weiterhin weist der Sicherheitsschalter 7 eine Zuhaltevorrichtung mit einem Zuhalteelement 15 in Form eines Zuhaltebolzens auf. Wie die Detaildarstellung von Figur 3 zeigt, ist das Zuhalteelement 15 in einer rohrförmigen Lagerung 16 gelagert. Das Zuhalteelement 15 kann mittels eines nicht dargestellten Elektroantriebs oder dergleichen in axialer Richtung bewegt werden. Der Elektroantrieb wird mit der Rechnereinheit 11 gesteuert.

Korrespondierend zu dem Zuhalteelement 15 ist im Betätiger 8 eine an dessen Unterseite ausmündende Aussparung 17 vorgesehen.

Die Funktion der Sicherheitsschalteranordnung 9 wird im Folgenden anhand der Figuren 2a bis 2c erläutert.

Bei geöffneter Schutztür 5 befindet sich der Betätiger 8 außerhalb seiner Eingriffsstellung am Betätiger 8 (Figur 2a). Der Transponder 12 im Betätiger 8 befindet sich dann außerhalb des Lesebereichs des RFID-Lesegeräts 13.

Bei geschlossener Schutztür 5 befindet sich der Betätiger 8 in seiner Eingriffsstellung am Sicherheitsschalter 7 (Figur 2b). Dann befindet sich der Transponder 12 innerhalb des Lesebereichs des RFID-Lesegeräts 13, so dass Daten aus dem Transponder 12 von dem RFID-Lesegerät 13 ausgelesen und in der Rechnereinheit 11 ausgewertet, insbesondere dekodiert werden.

Figur 2c zeigt den Betätiger 8 in der Eingriffsstellung bei erfolgter Zuhaltung, d.h. das Zuhalteelement 15 ist über dem Rand des Sicherheitsschalters 7 nach oben ausgefahren und ragt in die Ausnehmung des Betätigers 8 , so dass dieser in der Eingriffsstellung verriegelt ist.

Der Sicherheitsschalter 7 generiert über die Sicherheitsausgänge ausgegebene Signale, mit denen der Betrieb der Anlage 2 freigegeben ist nur dann, wenn der Betätiger 8 in der Eingriffsstellung zugehalten ist und die Daten aus dem Transponder 12 ausgelesen werden.

Bei in der Eingriffsstellung zugehaltenem Betätiger 8 können externe Kräfte auf die Zuhaltevorrichtung, insbesondere das Zuhalteelement 15 einwirken. Derartige Kräfte können insbesondere über die Schutztür 5 und den Betätiger 8 auf des Zuhalteelement 15 übertragen werden.

Erfindungsgemäß sind Sensormittel zur Erfassung dieser äußeren Kräfte vorgesehen. Im vorliegenden Fall sind die Sensormittel von Dehnungsmessstreifen 18 gebildet. Wie Figur 3 zeigt, sind die Dehnungsmessstreifen 18 an der Innenwand der Lagerung 16 angeordnet. Die Dehnungsmessstreifen 18 erstrecken sich über den gesamten Umfang der Lagerung 16. Die Dehnungsmessstreifen 18 stehen etwas über die Innenwand der Lagerung 16 hervor. Bei auftretenden externen Kräften wird das Zuhalteelement 15 quer zu dessen Längsachse ausgelenkt und entsprechend der Größe der einwirkenden Kraft mit Anpressdruck gegen die Innenwand der Lagerung 16 gedrückt. Dadurch verformen sich die Dehnungsmessstreifen 18. Entsprechend einer Verformung generieren die Dehnungsmessstreifen 18 elektrische Signale, die ein direktes Maß für die einwirkende Kraft F bilden. Die Signale der Dehnungsmessstreifen 18 werden in der Rechnereinheit 11 ausgewertet.

Um bei einer Krafteinwirkung möglichst große, gut auswertbare Signale der Dehnungsmessstreifen 18 zu erhalten, können die Dehnungsmessstreifen 18 auf einer elastisch verformbaren Unterlage gelagert werden. Dadurch werden bei einwirkenden Kräften die Dehnungsmessstreifen 18 stärker verformt und generierende Signale mit größeren Signalhüben generiert.

Die Auswertung der mittels der Dehnungsmessstreifen 18 ermittelten Kräfte erfolgt, vorzugsweise zeitaufgelöst, in der Rechnereinheit 11.

Figur 4 zeigt eine Variante der Ausführungsform gemäß Figur 3. In diesem Fall ist ringförmiges bewegliches Lager 19 vorgesehen, das sich über den gesamten Umfang der Lagerung 16 erstreckt und geringfügig über die Innenwand der Lagerung 16 hervorsteht. Alternativ kann ein feststehendes, jedoch verformbares Lager 19 vorgesehen sein, das aus mehreren gegeneinander beweglichen Segmenten besteht oder elastisch verformbar ist.

An die Außenseite des Lagers 19 schließt ein ringförmiges elastisches Element 20 an, auf welchem ein ringförmiger Dehnungsmessstreifen 18 gelagert ist.

Bei Auftreten von externen Kräften wird das Zuhaltelement 15 quer zu dessen Längsachse ausgelenkt und drückt gegen das Lager 19, wodurch dieses bewegt wird. Die Bewegung des Lagers 19 führt zu einer Verformung des elastischen Elements 20, was mit dem Dehnungsmessstreifen 18 detektiert wird.

Generell liefern die gemessenen Kräfte Informationen darüber, ob durch diese eine Gefahr einer Funktionsbeeinträchtigung oder Beschädigung der Zuhaltevorrichtung und damit des gesamten Sicherheitsschalters 7 besteht oder nicht.

Die Resultate dieser Auswertung können mittels der Anzeigemittel 14 visualisiert werden. Insbesondere können in der Rechnereinheit 11 abhängig von den gemessenen Kraftwerten Stör- und/oder Warnmeldungen generiert werden.

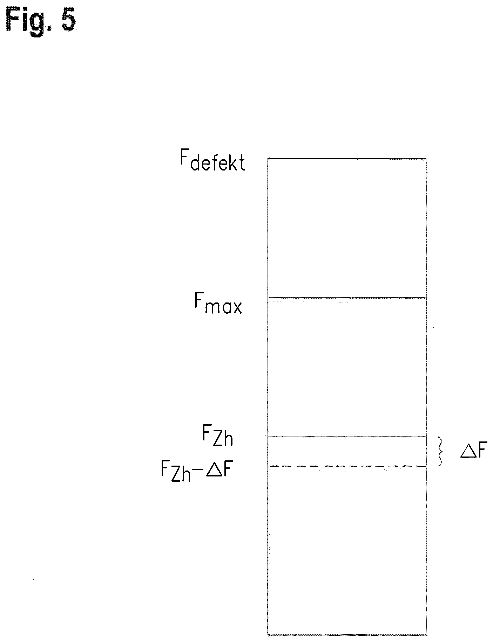

Ein hierfür verwendetes, in der Rechnereinheit 11 gespeichertes Kraftdiagramm zeigt Figur 5.

Das Diagramm gemäß Figur 5 zeigt Kraftwerte F_{Zh}, Fₘₐₓ und F_{defekt}, die externe, auf den Sicherheitsschalter 7 bzw. die Zuhaltevorrichtung einwirkende externe Kräfte F, klassifizieren.

Die Kräfte F_{Zh} und Fₘₐₓ sind durch die Norm DIN EN ISO 14119 definiert.

Liegen die externen Kräfte F im Bereich F < F_{Zh} sind keine Funktionsbeeinträchtigungen oder Beschädigungen des Sicherheitsschalters 7 zu befürchten.

Liegen die externen Kräfte F im Bereich F_{Zh} < F < Fₘₐₓ ist mit einer Verformung des Zuhalteelements 15 zu rechnen, wodurch die Zuhaltevorrichtung nicht mehr entriegeln kann, d.h. der Sicherheitsschalter 7 ist defekt.

Bei externen Kräften F, die oberhalb von Fₘₐₓ liegen, ist der Sicherheitsschalter 7 zerstört, die Schutztür 5 ist dann offen.

Vorteilhaft wird in der Rechnereinheit 11 die Kraft F F_{Zh} als erster Grenzwert und die Kraft F_{Zh} - Δ F als zweiter Grenzwert definiert.

Wird mit dem Dehnungsmessstreifen 18 eine externe Kraft F > F_{Zh} detektiert, kann eine Funktionsbeeinträchtigung des Sicherheitsschalters 7 und dessen Zuhaltevorrichtung vorliegen und es wird an den Anzeigemitteln 14 eine Störmeldung ausgegeben.

Diese Störmeldung signalisiert dem Anwender einen Defekt des Sicherheitsschalters 7. Der Anwender kann beispielsweise auf die Störmeldung dadurch reagieren, dass er den defekten Sicherheitsschalter 7 gegen einen neuen Sicherheitsschalter 7 austauscht.

Wird mit den Dehnungsmessstreifen 18 eine externe Kraft F im Grenzwertbereich Δ F registriert, wird an den Anzeigemitteln 14 eine Warnmeldung ausgegeben. Diese Warnmeldung signalisiert dem Anwender einen kritischen Zustand, da die externen Kräfte F dicht unterhalb des Grenzwerts F_{Zh} liegen, ab welchen Beschädigungen des Sicherheitsschalters 7 auftreten.

Der Anwender kann anhand der Warnmeldung die Applikation überprüfen und geeignete Gegenmaßnahmen treffen, dass Beschädigungen des Sicherheitsschalters 7 vermieden werden.

Generell kann in der Rechnereinheit 11 auch eine gesonderte Störmeldung generiert werden, wenn die äußeren Kräfte F den Grenzwert Fₘₐₓ übersteigen. Da dann die Schließfunktion für die Schutztür 5 nicht mehr gewährleistet ist, werden anhand der gesonderten Störmeldung die über die Sicherheitsausgänge des Sicherheitsschalters 7 ausgegebenen Signale derart geändert, dass der Betrieb der Anlage 2 aus Sicherheitsgründen stillgesetzt wird.

Prinzipiell kann eine Störmeldung auch dann generiert werden, wenn die äußeren Kräfte einen Grenzwert N x Fₘₐₓ überteigen, wobei N ein Faktor ist, der geringfügig kleiner als 1 ist. Beispielsweise kann N=0,8 gewählt werden.

Die vorgenannten Auswertungen können dahingehend erweitert sein, dass eine Stör- oder Warnmeldung generiert wird, wenn innerhalb eines vorgegebenen Zeitintervalls die gemessene Kraft F mit einer bestimmten Häufigkeit einen Grenzwert überschreitet oder innerhalb eines Grenzwertbereichs liegt.

Die Funktionalität der erfindungsgemäßen Sicherheitsschalteranordnung 9 kann dadurch erweitert sein, dass mit den Sensormitteln gemessene Kräfte an eine externe Einheit ausgelesen werden.

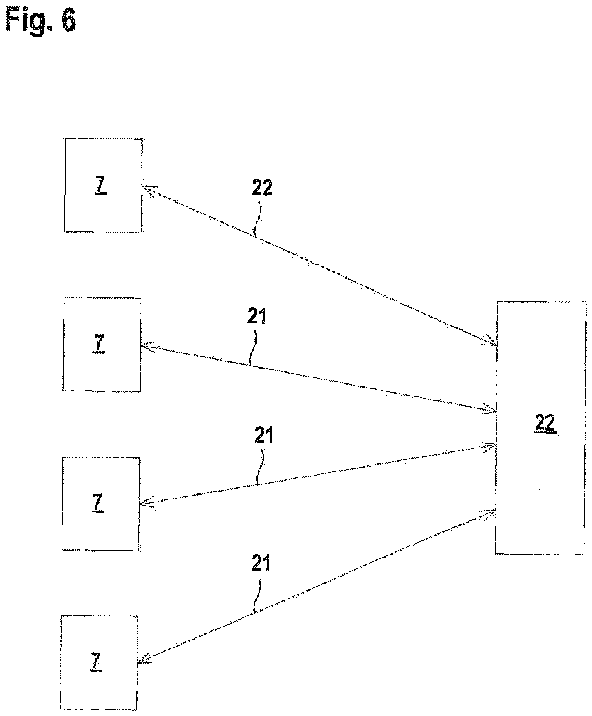

Eine entsprechende Anordnung zeigt Figur 6. Dort sind mehrere Sicherheitsschalter 7 verschiedener Sicherheitsschalteranordnungen 9 über Datenverbindungen 21 mit einer externen Einheit verbunden. Die externe Einheit ist insbesondere eine Steuereinheit 22. Die Datenverbindungen 21 sind dann von Internetverbindungen gebildet.

Die Sicherheitsschalter 7 übermitteln über die Datenverbindung 21 die mit den Sensormitteln gemessenen Kräfte oder aus diesen abgeleiteten Größen, insbesondere auch Stör- und Warnmeldungen, an die Steuereinheit 22.

Die Steuereinheit 22 wertet die Daten aus und kann damit fortlaufend eine Zustandskontrolle der Sicherheitsschalteranordnung 9 durchführen.

Die Steuereinheit 22 kann insbesondere an einen nicht dargestellten Cloud-Rechner angeschlossen sein, insbesondere über das Internet.

Auch können mehrere Anordnungen gemäß Figur 6 an den Cloud-Rechner angeschlossen sein, wobei diese an unterschiedlichen Standorten installiert sein können.

### Bezugszeichenliste

- (1): Sicherheitssystem
- (2): Anlage
- (3): Gefahrenbereich
- (4): Umzäunung
- (5): Schutztür
- (6): Sicherheitssteuerung
- (7): Sicherheitsschalter
- (7a): Gehäuse
- (8): Betätiger
- (9): Sicherheitsschalteranordnung
- (10): Rahmen
- (11): Rechnereinheit
- (12): Transponder
- (13): RFID-Lesegerät
- (14): Anzeigemittel
- (15): Zuhalteelement
- (16): Lagerung
- (17): Aussparung
- (18): Dehnungsmessstreifen
- (19): Lager
- (20): elastisches Element
- (21): Datenverbindung
- (22): Steuereinheit
- (F): Kraft

## Patentansprüche

1. Sicherheitsschalteranordnung (9) mit einem Sicherheitsschalter (7) und einem zugeordneten Betätiger (8), welcher in eine Eingriffsstellung am Sicherheitsschalter (7) einbringbar ist, wobei eine Zuhaltevorrichtung vorhanden ist, mittels derer eine Zuhaltung des in die Eingriffsstellung eingebrachten Betätigers (8) bewirkt ist, wobei Sensormittel vorhanden sind, mittels derer auf die Zuhaltevorrichtung einwirkende Kräfte erfasst werden, **dadurch gekennzeichnet, dass** die Zuhaltevorrichtung ein Zuhalteelement (15) aufweist, welches in eine Sperrstellung verfahren werden kann, um die Zuhaltung des in die Eingriffsstellung eingebrachten Betätigers (8) zu bewirken, und dass mit den Sensormitteln auf das Zuhalteelement (15) einwirkende Kräfte erfasst werden.

2. Sicherheitsschalteranordnung (9) nach Anspruch 1, **dadurch gekennzeichnet, dass** der Betätiger (8) an einer trennenden Schutzeinrichtung angeordnet ist, wobei externe, auf das Zuhalteelement (15) einwirkende Kräfte durch eine Bewegung der trennenden Schutzeinrichtung verursacht sind.

3. Sicherheitsschalteranordnung (9) nach einem der Ansprüche und 2, **dadurch gekennzeichnet, dass** die Zuhaltevorrichtung eine Lagerung (16) aufweist, in der das Zuhalteelement (15) beweglich gelagert ist.

4. Sicherheitsschalteranordnung (9) nach Anspruch 3, **dadurch gekennzeichnet, dass** die Sensormittel in der Lagerung (16) angeordnet sind.

5. Sicherheitsschalteranordnung (9) nach einem der Ansprüche 1 bis 4, **dadurch gekennzeichnet, dass** die Sensormittel in Form von Dehnungsmessstreifen (18) ausgebildet sind.

6. Sicherheitsschalteranordnung (9) nach Anspruch 5, **dadurch gekennzeichnet, dass** die Dehnungsmessstreifen (18) auf einer elastisch verformbaren Unterlage gelagert sind.

7. Sicherheitsschalteranordnung (9) nach einem der Ansprüche 1 bis 6, **dadurch gekennzeichnet, dass** mit den Sensormitteln zeitaufgelöste Kraftmessungen durchgeführt werden.

8. Sicherheitsschalteranordnung (9) nach einem der Ansprüche 1 bis 7, **dadurch gekennzeichnet, dass** Anzeigemittel (14) vorhanden sind, mittels derer Ergebnisse der mit den Sensormitteln durchgeführten Kraftmessungen angezeigt werden.

9. Sicherheitsschalteranordnung (9) nach Anspruch 8, **dadurch gekennzeichnet, dass** abhängig von mit den Sensormitteln durchgeführten Kraftmessungen Stör- und/oder Warnmeldungen angezeigt werden.

10. Sicherheitsschalteranordnung (9) nach Anspruch 9, **dadurch gekennzeichnet, dass** eine Stör- oder Warnmeldung generiert wird, wenn die gemessene Kraft (F) einen Grenzwert überschreitet oder innerhalb eines Grenzwertbereichs liegt.

11. Sicherheitsschalteranordnung (9) nach Anspruch 9, **dadurch gekennzeichnet, dass** eine Stör- oder Warnmeldung generiert wird, wenn innerhalb eines vorgegebenen Zeitintervalls die gemessene Kraft (F) mit einer bestimmten Häufigkeit einen Grenzwert überschreitet oder innerhalb eines Grenzwertbereichs liegt.

12. Sicherheitsschalteranordnung (9) nach einem der Ansprüche 1 bis 11, **dadurch gekennzeichnet, dass** mit den Sensormitteln gemessene Kräfte an eine externe Einheit ausgelesen werden.

13. Sicherheitsschalteranordnung (9) nach Anspruch 12, **dadurch gekennzeichnet, dass** die externe Einheit ein Cloud-Rechner ist.

14. Verfahren zum Betrieb einer Sicherheitsschalteranordnung (9) mit einem Sicherheitsschalter (7) und einem zugeordneten Betätiger (8), welcher in eine Eingriffsstellung am Sicherheitsschalter (7) einbringbar ist, wobei eine Zuhaltevorrichtung vorhanden ist, mittels derer eine Zuhaltung des in die Eingriffsstellung eingebrachtem Betätigers (8) bewirkt wird, wobei Sensormittel vorhanden sind, mittels derer auf die Zuhaltevorrichtung einwirkende Kräfte erfasst werden, **dadurch gekennzeichnet, dass** die Zuhaltevorrichtung ein Zuhalteelement (15) aufweist, welches in eine Sperrstellung verfahren werden kann, um die Zuhaltung des in die Eingriffsstellung eingebrachten Betätigers (8) zu bewirken, und dass mit den Sensormitteln auf das Zuhalteelement (15) einwirkende Kräfte erfasst werden,

## Claims

1. Safety switch system (9) with a safety switch (7) and an associated actuator (8), which can be brought into an engagement position on the safety switch (7), wherein a locking device is provided by means of which the actuator (8) brought into the engagement position is locked, wherein sensor means are provided by means of which forces acting on the locking device are detected, **characterised in that** the locking device has a locking element (15) which can be moved into a locking position in order to lock the actuator (8) brought into the engagement position, and **in that** the sensor means detect forces acting on the locking element (15).

2. Safety switch system (9) according to claim 1, **characterised in that** the actuator (8) is arranged on a separating protective device, wherein external forces acting on the locking element (15) are caused by a movement of the separating protective device.

3. Safety switch system (9) according to one of claims 1 and 2, **characterised in that** the locking device has a bearing (16) in which the locking element (15) is movably mounted.

4. Safety switch system (9) according to claim 3, **characterised in that** the sensor means are arranged in the bearing (16).

5. Safety switch system (9) according to one of claims 1 to 4, **characterised in that** the sensor means are designed in the form of strain gauges (18).

6. Safety switch system (9) according to claim 5, **characterised in that** the strain gauges (18) are mounted on an elastically deformable substrate.

7. Safety switch system (9) according to one of claims 1 to 6, **characterised in that** time-resolved force measurements are carried out with the sensor means.

8. Safety switch system (9) according to one of claims 1 to 7, **characterised in that** display means (14) are provided, by means of which the results of the force measurements carried out with the sensor means are displayed.

9. Safety switch system (9) according to claim 8, **characterised in that** fault and/or warning messages are displayed depending on force measurements carried out with the sensor means.

10. Safety switch system (9) according to claim 9, **characterised in that** a fault or warning message is generated when the measured force (F) exceeds a limit value or lies within a limit value range.

11. Safety switch system (9) according to claim 9, **characterised in that** a fault or warning message is generated if, within a specified time interval, the measured force (F) exceeds a limit value with a certain frequency or lies within a limit value range.

12. Safety switch system (9) according to one of claims 1 to 11, **characterised in that** forces measured by the sensor means are read out to an external unit.

13. Safety switch system (9) according to claim 12, **characterised in that** the external unit is a cloud computer.

14. Method for operating a safety switch system (9) with a safety switch (7) and an associated actuator (8), which can be brought into an engagement position on the safety switch (7), wherein a locking device is provided by means of which the actuator (8) brought into the engagement position is locked, wherein sensor means are provided by means of which forces acting on the locking device are detected, **characterised in that** the locking device has a locking element (15) which can be moved into a locking position to lock the actuator (8) brought into the engagement position, and **in that** the sensor means detect forces acting on the locking element (15).

## Revendications

1. Ensemble interrupteur de sécurité (9) comprenant un interrupteur de sécurité (7) et un actionneur associé (8) pouvant être amené en position d'engagement sur l'interrupteur de sécurité (7), dans lequel est prévu un dispositif de verrouillage au moyen duquel l'actionneur (8) amené en position d'engagement est verrouillé, dans lequel des moyens de détection sont prévus, au moyen desquels les forces agissant sur le dispositif de verrouillage sont détectées, **caractérisé en ce que** le dispositif de verrouillage comporte un élément de verrouillage (15) qui peut être déplacé dans une position de verrouillage afin de verrouiller l'actionneur (8) amené en position d'engagement, et **en ce que** les moyens de détection détectent les forces agissant sur l'élément de verrouillage (15).

2. Ensemble interrupteur de sécurité (9) selon la revendication 1, **caractérisé en ce que** l'actionneur (8) est disposé sur un dispositif de protection séparateur, dans lequel les forces externes agissant sur l'élément de verrouillage (15) sont provoquées par un mouvement du dispositif de protection séparateur.

3. Ensemble interrupteur de sécurité (9) selon l'une des revendications 1 et 2, **caractérisé en ce que** le dispositif de verrouillage comporte un palier (16) dans lequel l'élément de verrouillage (15) est monté de manière mobile.

4. Ensemble interrupteur de sécurité (9) selon la revendication 3, **caractérisé en ce que** les moyens de détection sont disposés dans le palier (16).

5. Ensemble interrupteur de sécurité (9) selon l'une des revendications 1 à 4, **caractérisé en ce que** les moyens de détection sont conçus sous la forme de jauges de contrainte (18).

6. Ensemble interrupteur de sécurité (9) selon la revendication 5, **caractérisé en ce que** les jauges de contrainte (18) sont montées sur un substrat élastiquement déformable.

7. Ensemble interrupteur de sécurité (9) selon l'une des revendications 1 à 6, **caractérisé en ce que** des mesures de force résolues dans le temps sont effectuées à l'aide des moyens de détection.

8. Ensemble interrupteur de sécurité (9) selon l'une des revendications 1 à 7, **caractérisé en ce que** des moyens d'affichage (14) sont prévus, au moyen desquels les résultats des mesures de force effectuées avec les moyens de détection sont affichés.

9. Ensemble interrupteur de sécurité (9) selon la revendication 8, **caractérisé en ce que** des messages d'erreur et/ou d'avertissement sont affichés en fonction des mesures de force effectuées à l'aide des moyens de détection.

10. Ensemble interrupteur de sécurité (9) selon la revendication 9, **caractérisé en ce qu'**un message d'erreur ou d'avertissement est généré lorsque la force mesurée (F) dépasse une valeur limite ou se situe dans une plage de valeurs limites.

11. Ensemble interrupteur de sécurité (9) selon la revendication 9, **caractérisé en ce qu'**un message d'erreur ou d'avertissement est généré si, dans un intervalle de temps spécifié, la force mesurée (F) dépasse une valeur limite avec une certaine fréquence ou se situe dans une plage de valeurs limites.

12. Ensemble interrupteur de sécurité (9) selon l'une des revendications 1 à 11, **caractérisé en ce que** les forces mesurées par le moyen de détection sont transmises à une unité externe.

13. Ensemble interrupteur de sécurité (9) selon la revendication 12, **caractérisé en ce que** l'unité externe est un ordinateur en nuage.

14. Procédé pour faire fonctionner un dispositif de commutation de sécurité (9) avec un interrupteur de sécurité (7) et un actionneur associé (8) qui peut être amené en position d'engagement sur l'interrupteur de sécurité (7), dans lequel il est prévu un dispositif de verrouillage au moyen duquel l'actionneur (8) amené en position d'engagement est verrouillé, dans lequel des moyens de détection sont prévus, au moyen desquels les forces agissant sur le dispositif de verrouillage sont détectées, **caractérisé en ce que** le dispositif de verrouillage comporte un élément de verrouillage (15) qui peut être déplacé dans une position de verrouillage pour verrouiller l'actionneur (8) amené en position d'engagement, et **en ce que** les moyens de détection détectent les forces agissant sur l'élément de verrouillage (15).
